# EUROPEAN PATENT SPECIFICATION

(11) **EP 1 510 843 B1**
(45) Date of publication and mention of the grant of the patent: **13.06.2007**
(21) Application number: 04015382.7
(22) Date of filing: 30.06.2004
(51) Int. Cl.: G02B 6/42, G02B 6/43

(54) **Optical connector**
Optischer Steckverbinder
Connecteur optique

(30) Priority: 25.08.2003 JP 2003300626
(43) Date of publication of application: 02.03.2005
(73) Proprietor: Mitsumi Electric Co., Ltd., Tama-Shi, Tokyo (JP)
(72) Inventor: Sukegawa, Akihito, c/o MITSUMI ELECTRIC CO.,LTD, Tama-shi, Tokyo (JP); Asano, Shinichi, c/o MITSUMI ELECTRIC CO.,LTD., Tama-shi, Tokyo (JP)
(74) Representative: Grünecker, Kinkeldey, Stockmair & Schwanhäusser Anwaltssozietät

(56) References cited:
- EP-A- 0 928 980
- US-B1- 6 450 703

## Description

### BACKGROUND OF THE INVENTION

### 1. Field of the Invention

The present invention relates to an optical connector. More particularly, the present invention relates to an optical connector in which an optical element module attached to and accommodated in a connector housing is held being pushed by a cap which is attached to the connector housing after the optical element module has been attached to the connector housing.

### 2. Description of the related art

Conventionally, an optical connector has been well known, which includes: a connector housing; an optical transmission member attached to and accommodated in the connector housing; an optical element module attached to and accommodated in the connector housing; and a cap attached to the connector housing in such a manner that the cap covers the back side of the optical element module after the optical element module has been attached to and accommodated in the connector housing, so that the cap can hold the optical element module in the connector housing. Concerning this optical connector, for example, refer to JP-A-2001-13367 and JP-A-2001-66469.

The optical connectors disclosed in Patent Documents 1 and 2 are composed as follows. An optical element module attached to and accommodated in a connector housing is pushed to and held in the connector housing by a cap which is attached to the connector housing after the optical element module has been attached to the connector housing in such a manner that the cap covers the back face side of the optical element module, and further, a terminal of the optical element module is guided outside the connector housing from between the connector housing and the cap. In the optical connector, engaging portions having a step portion are provided on the inner faces of both the right and left side walls of the connector housing, and engaging protrusions corresponding to the engaging portions having a step portion of the connector housing are provided at the right and left edge portions of the cap.

In this optical connector, the cap is attached to the connector housing as follows. First, the optical element module is attached to and accommodated in the connector housing. Next, the engaging protrusions of the cap are inserted into the connector housing. While the engaging protrusions of the cap are sliding on the inside wall face of the connector housing, the cap is pushed to the connector housing. After the cap has been inserted into the connector housing until the engaging protrusions arrive at positions corresponding to the engaging portions having a step portion, the engaging protrusions are engaged with the engaging portions having a step portion. Due to this engagement, the cap can be prevented from coming out from the connector housing. Due to the foregoing, a recess portion of the connector housing in which the optical element module is accommodated is closed by the cap, and the optical element module in the recess portion is held between the connector housing and the cap. When the optical element module is held between the connector housing and the cap in this way, an inner face of the cap is pushed to the back face of the optical element module. Therefore, the optical element module is also pushed to the connector housing. That is, the optical element module is interposed between the connector housing and the cap. Therefore, the optical element module can be held by the connector housing without causing any rattle.

However, in this optical connector structure, the following problems may be encountered. Unless dimensions of the engaging protrusions and the engaging portions having a step portion are sufficiently controlled in portions where the engaging protrusions and the engaging portions having a step portion are engaged with each other, the inner face of the cap can not come into pressure contact with the back face of the optical element module when the engaging protrusions and the engaging portions having a step portion are engaged with each other. As a result, the optical element module can not be pushed by the cap, and rattle may be caused between the optical element module and the connector housing. In the case where rattle is caused between the optical element module and the connector housing as described above, a terminal of the optical element module rattles which is guided out from between the connector housing and the cap. When the terminal rattles as described above, it is difficult for the terminal of the optical element module to be inserted into an attaching hole formed on a circuit board on which the optical connector is mounted.

Although not described in Patent Documents, a conventional calking method is well known in which the cap is attached to the connector housing by means of calking. This calking method is conducted as follows. Pins are previously provided at the opening edge of the connector housing in such a manner that the pins are protruding in the cap attaching direction, and engaging holes, into which the pins are inserted, are formed in the cap. In the case of attaching the cap to the connector housing, after the optical element module has been attached to and accommodated in the connector housing, the pins of the connector housing are inserted into the engaging holes of the cap, and the cap is pushed to the connector housing. When the cap is pushed to a predetermined position, forward end portions of the pins of the connector housing are protruded from the engaging holes of the cap to the back face of the cap.

Next, the forward end portion of the pin of the connector housing protruding to the back side of the cap is engaged with the cap by means of calking. Due to this calking engagement, the cap is prevented from coming out. Due to the foregoing, the cap closes the recess portion of the connector housing to which the optical element module is attached and accommodated, and the optical element module attached to the recess portion can be held by the connector housing and the cap. Due to this holding action, an inner face of the cap is pushed to the rear face of the optical element module. Due to this pushing action, the optical element module is pushed to the connector housing. Accordingly, the front and rear faces of the optical element module are held between the connector housing and the cap. Therefore, the optical element module can be held in the connector housing without causing any rattle.

However, even in the case of the optical connector structure in which the cap is attached to the connector housing by means of calking, when the working is not sufficiently controlled, for example, when the calking is not sufficiently conducted, rattle is caused between the connector housing and the cap, and the inner face of the cap is not sufficiently contacted with the rear face of the optical element module. Therefore, the optical element module can not be pushed by the cap, and rattle may be caused between the optical element module and the connector housing. In the case where rattle is caused between the optical element module and the connector housing as described above, a terminal integrated with the optical element module, that is, a terminal of the optical element module, which is guided out from between the connector housing and the cap, becomes rickety. When the terminal rattles as described above, it is difficult for the terminal of the optical element module to be inserted into an attaching hole formed on a circuit board on which the optical connector is mounted. For example, it is difficult for the terminal of the optical element module to be inserted into a through-hole.

As described above, the conventional optical connector has the following disadvantages. In the case of attaching the cap to the connector housing, unless the dimensions and the working are sufficiently controlled in the engaging portion, the inner face of the cap is not sufficiently contacted with the rear face of the optical element module accommodated in the recess portion of the connector housing. Therefore, rattle is caused between the optical element module and the connector housing, and further the optical element module can not be accurately positioned with respect to a predetermined position of the housing. This deterioration of accuracy causes a fluctuation of the distance between the optical element module and the optical transmission member which is an opponent of the connection for giving and receiving an optical signal. In this fluctuation, when the distance is long, in general, a loss of the quantity of light is increased, that is, quality fluctuates according to the fluctuation of the distance.

In the case where rattle is caused between the optical element module and the connector housing after the optical element module has been attached to and accommodated in the recess portion of the connector housing and then the recess portion has been closed by the cap, the terminal of the optical element module, which is guided outside from between the connector housing and the cap, becomes rickety. When the terminal is rickety as described above, the following problems may be encountered. When the terminal is inserted into an attaching hole formed on the circuit board on which the optical connector is mounted, for example, when the terminal is inserted into the through-hole, it becomes difficult for the terminal to be inserted into the through-hole. There is a possibility that the terminal can not be inserted into the through-hole and further the lead is deformed when the terminal is forcibly inserted into the through-hole.

### SUMMARY OF THE INVENTION

Therefore, a technical task to be solved is generated, in order to provide an optical connector capable of accurately setting an optical element module at a predetermined position in a connector housing without causing any rattle even when the dimension control is relatively roughly conducted on an engaging portion.

The present invention, described in claim 1, has been proposed to accomplish the above object.

Due to the inventive structure, the following advantages can be provided. When the cap is attached to the connector housing after the optical element module has been attached to the connector housing, the spring portion comes into pressure contact with one face of the optical element module at all times. By this spring force, the other face of the optical element module is pushed to a predetermined position of the connector housing, and one face of the optical element module is pushed to the cap via the spring portion. When the optical element module is restricted by the spring force in this way, the optical element module can be held between the connector housing and the cap under the condition that the occurrence of rattle is suppressed. At the same time, the spring force given to the connector housing, the optical element module and the cap can absorb errors of manufacture caused between the connector housing and the optical element module and between the optical element module and the cap.

According to the optical connector described in claim 1, a spring force generated by the spring portion always acts between the connector housing and the optical element module and between the optical element module and the cap. Therefore, by the spring force, errors of manufacturing caused between the connector housing and the optical element module and between the optical element module and the cap can be absorbed. Therefore, the optical element module can be always held at a predetermined position without causing any rattle. Accordingly, manufacturing of the optical connector can be simplified without being influenced by the dimension control and the working control in the manufacturing process. Since the optical element module can be held at a predetermined position in the connector housing, it is possible to avoid a fluctuation of the distance between the optical element module and the optical transmission member which is arranged in the connector housing and gives and receives an optical signal. Due to the foregoing, the following advantages can be provided. A loss of the quantity of light caused by a fluctuation of the distance between the optical transmission member and the optical element module is suppressed, so that the product accuracy can be stabilized and the quality of the product can be enhanced. Further, since it becomes possible to avoid rattle of the optical element module, rattle of the terminal of the optical element module, which is guided outside from between the connector housing and the cap, can be avoided at the same time. Due to the foregoing, the optical connector can be simply mounted on a circuit board, and insertion can be easily performed and deformation of the lead can be avoided.

According to the optimal connector described in claim 2, the optical element module includes: a light emitting element module having a light emitting element for giving an optical signal to the optical transmission member; and a light receiving element module having a light receiving element for receiving an optical signal from the optical transmission member, wherein the spring coping with the light emitting element module and the spring coping with the light receiving element module are respectively provided in the cap. Therefore, the optical connector is provided with both the function of supplying an optical signal to the optical transmission member and the function of receiving an optical signal from the optical transmission member.

According to the optical connector described in claim 3, the cap is made of synthetic resin. According to claim 1, the spring is composed of a portion of the cap which is formed into a rectangular sheet shape, and a substantially intermediate portion of the rectangular sheet-shaped portion is bent inward and protruded and formed into a shape, the cross-section of which is a substantially elbowed shape. Therefore, the optical connector can be simply manufactured. Since the spring portion is formed in such a manner that a substantially intermediate portion of the rectangular sheet portion is bent inward and protruded, wherein the cross section is formed into a substantially elbowed shape. Therefore, the thus protruding intermediate portion, that is, the same portion of the spring portion always comes into pressure contact with one side of the optical element module. Therefore, the spring pressure can be stabilized.

According to the optical connector described in claim 4, engaging pawls are provided on both sides of the connector housing which are opposed to each other, a pair of right and left engaging pieces are provided at both side edges of the cap, the engaging pieces slide on both sides of the connector housing in such a manner that the engaging pieces pinch the connector housing at the time of attaching the cap, and the engaging pieces respectively have an engaging hole engaged with the engaging pawl at a position corresponding to the engaging pawl of the connector housing. In this structure, when a pair of right and left engaging pieces of the cap are respectively made to slide on both sides of the connector housing, at a position where the engaging hole of the engaging piece corresponds to the engaging pawl of the connector housing, the engaging hole and the engaging pawl are engaged with each other so that the cap can not come out from the connector housing. In this way, the cap can be simply attached to the connector housing.

### BIREF DESCRIPTION OF THE DRAWINGS

Fig. 1 is a longitudinally sectional view of the optical connector of the present invention.
Fig. 2 is a longitudinally sectional view of the optical connector of the present invention in which some parts are omitted and the cap is removed.
Fig. 3 is a sectional view taken on line A - A in Fig. 1.
Fig. 4 is a sectional view taken on line B - B in Fig. 2.
Fig. 5 is a plan view of the optical connector, wherein the view is taken in the direction of line C - C.
Fig. 6 is an exploded perspective view showing an arrangement of the primary portion of the optical connector of the present invention.

### DESCRIPTION OF THE PREFERRED EMBODIMENT

This embodiment is realized as follows. The spring portion is provided on the inner side of the cap, and the cap is attached to the connector housing after the optical element module has been attached to the connector housing. Then, the spring portion always comes into pressure contact with one face of the optical element module. By this spring force coming into pressure contact, the other face of the optical element module is pushed to a predetermined position of the connector housing. Therefore, the optical element module can be held between the connector housing and the cap by the spring force.

### (Embodiment 1)

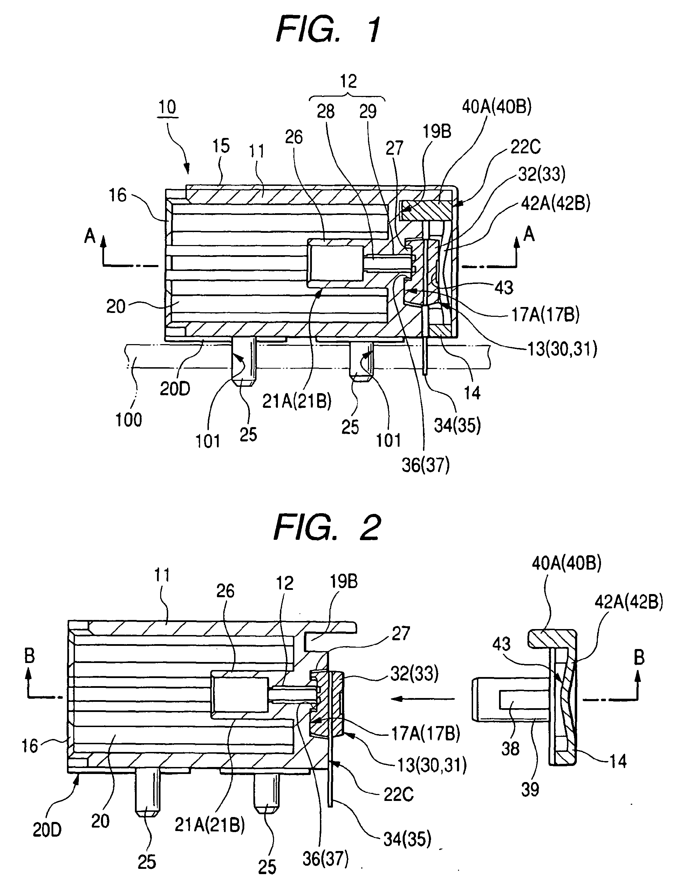

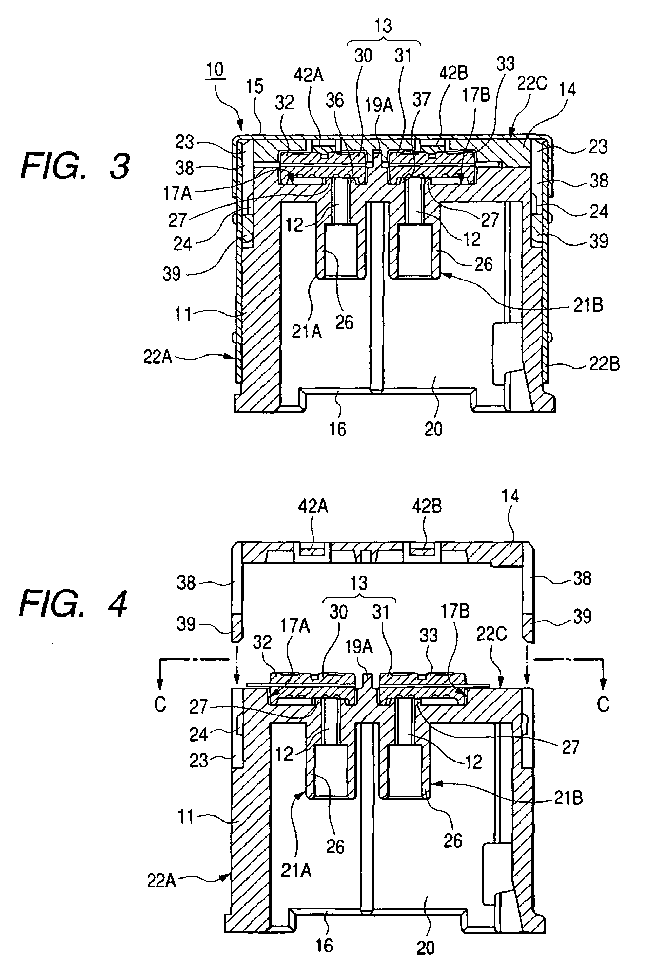

Figs. 1 and 3 are views showing an embodiment of the optical connector of the present invention. Fig. 1 is a longitudinally sectional view of the optical connector, and Fig. 3 is a sectional view taken on line A - A in Fig. 1. In Figs. 1 and 3, the optical connector 10 includes: a connector housing 11, sleeves 12, 12, an optical element module 13, a cap 14 and a shield case 15.

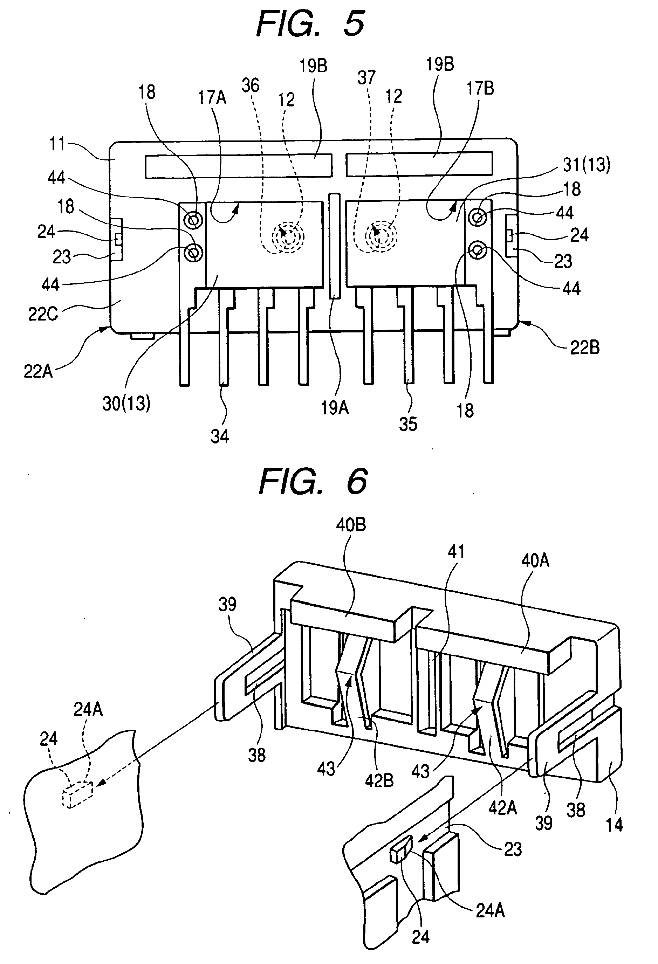

Figs. 2, 4, 5 and 6 are views showing an optical connector of the present invention in which some parts are omitted here. Fig. 2 is a longitudinally sectional view of the optical connector in which the shield case is omitted and the cap is reproved. Fig. 4 is a sectional view taken on line B - B in Fig. 2. Fig. 5 is a plan view of the optical connector, wherein the view is taken in the direction of line C - C in Fig. 4. Fig. 6 is an exploded perspective view showing a primary portion of the optical connector.

Referring to Figs. 1 to 6, the structure of the optical connector 10 of the present invention will be further explained in detail. The connector housing 11 is made of synthetic resin, for example, PBT. As shown in Figs. 1 to 5, the connector housing 11 is formed into a rectangular box shape. The front side of the connector housing 11 is widely open, and an optical plug not shown can be inserted from the front opening portion 16. A pair of accommodating recess portions 17A, 17A for accommodating the optical element module 13, protrusions 18, 18 (shown in Fig. 5) for positioning the optical element module 13, a protruding wall 19A (shown in Figs. 3, 4 and 5) for positioning the cap and recess portions 19B, 19B (shown in Figs. 1, 2 and 5) for positioning the cap are provided on the rear wall 22C side of the connector housing 11. An engaging portion 20 engaging with the optical plug (not shown) inserted through the front open portion 16, a receiving cylinder 21A communicating with the engaging portion 20 and the accommodating recess portion 17A and a receiving cylinder 21B communicating with the engaging portion 20 and the accommodating recess portion 17B are provided in the connector housing 11.

On the left wall 22A and the right wall 22B outside the connector housing 11, the guide grooves 23, 23 are provided which continuously extend from the rear wall 22C to the front side. In the intermediate portion of each guide groove 23, 23, the engaging pawl 24, 24 is provided, the shape of which is substantially rectangular, protruding outside from the bottom face of each guide groove 23, 23 making a substantially right angle. The inclined face 24a (shown in Fig. 6) is provided on the rear face side of each engaging pawl 24, 24. The inclined face 24a gradually lowers to the bottom face side of each guide groove 23, 23 when it proceeds to the rear wall 22C side. As shown in Fig. 1, on the bottom wall 20D of the connector housing 11, the boss 25 for fixing, which is inserted into the attaching hole 101 of the circuit board 100 to be attached, is protruded.

The structure of the rear wall 22C will be further explained below. As shown in Figs. 3 to 5, the protruding wall 19A for positioning the cap is a long and slender wall perpendicularly crossing the longitudinal direction of the rear wall 22C and protrudes backward from the substantially intermediate position in the longitudinal direction of the rear wall 22C. The accommodating recess portions 17A, 17B are respectively formed on both sides of the protruding wall 19A for positioning the cap. As shown in Fig. 5, the protrusions 18, 18 for positioning the optical element module are arranged in such a manner that two protrusions protrude backward from the circumferential edge of each accommodating recess portion 17A, 17B. Two recess portions 19B for positioning the cap are formed as a long and slender groove along one side of the rear wall 22C in the longitudinal direction.

The receiving cylinders 21A, 21B are formed into a cylindrical shape. Each receiving cylinder 21A, 21B includes: a large diameter portion 26 having an inner diameter into which a ferrule of the optical plug (not shown) is inserted from the front opening portion 16; and a small diameter portion 27 having an inner diameter into which the sleeve 12 is press-fitted and attached, wherein axes of the large diameter portion 26 and the small diameter portion 27 are made to coincide with each other. In this connection, a rear portion of the small diameter portion 27 protrudes a little into the accommodating recess portion 17A, 17B.

The sleeve 12 functions as an optical transmission member. The sleeve 12 includes: a waveguide passage 28 made of glass or synthetic resin composed of a core and clad; and a cylindrical holder 29 made of metal covering an outer circumference of this waveguide passage 28. In this connection, concerning the sleeve 12, for example, it is possible to use an optical fiber, which is cut to the length of the sleeve 12, for the sleeve 12. In this case, the core wire portion made of glass or synthetic resin of the optical fiber corresponds to the waveguide passage 28, and the sheath made of synthetic resin corresponds to the holder 29.

The optical element module 13 includes: a light emitting element module 30 accommodated in the accommodating recess portion 17A; and a light receiving element module 31 accommodated in the accommodating recess portion 17B. The light emitting element module 30 and the light receiving element module 31 are composed in such a manner that a light emitting element (for example, a light emitting diode) not shown and a light receiving element (for example, a photo diode) not shown are embedded in the molded portions 32, 33 which are made of synthetic resin having the same transmission factor as that of the waveguide passage 28 of the sleeve 12 and the light emitting element and the light receiving element are composed into a package. Four terminals 34, 35 are guided out from each molded portion 32, 33.

In the mold portion 32, 33, at a position corresponding to the front portion of the light receiving element or the light emitting element, the circular hole 36, 37 is formed, which accommodates the sleeve 12 attached to the receiving cylinder 21A, 21B and protruding into the accomodating chamber 17A 17B and also accommodates the small diameter portion 27 on the housing side. That is, when the holes 36, 37 are formed, in the case of accommodating the light emitting element module 30 and the light receiving element module 31 in the accommodating chambers 17A, 17B, the rear portions of the sleeves 12, 12 press-fitted into the receiving cylinders 21A, 21B and the small diameter portions 27, 27 are accommodated in the holes 36, 37, and the sleeves 12, 12 respectively come close to the light emitting element and the light receiving element.

The cap 14 is made of synthetic resin by means of molding, for example, the cap 14 is made of PBT which is the same material as that of the connector housing 11. As shown in Figs. 1 to 4 and Fig. 6, the cap 14 is formed into a substantially rectangular sheet shape. On the front side of the cap 11 which is attached to the connector housing 11, a pair of right and left engaging pieces 39 respectively having an engaging hole 38, two engaging protruding walls 40A, 40B and two sheet-shaped spring portions 42A, 42B are integrally formed. In the cap 14, the recess portion 41 (shown in Fig. 6) is also formed in such a manner that the recess portion 41 is located between the two engaging protruding walls 40A, 40B.

The engaging pieces 39, 39 are formed respectively corresponding to the guide grooves 23, 23 of the connector housing 11. The engaging pieces 39, 39 can be slidably inserted into the guide grooves 23, 23 from the rear wall 23C side. In this connection, each engaging piece 39, 39 can be elastically deformed. The engaging hole 38, 38 formed in each engaging piece 39, 39 is provided corresponding to the engaging pawl 24, 24 provided in the guide groove 23, 23. When the engaging piece 39, 39 is inserted from the rear wall 23C side into the guide groove 23, 23 at a predetermined position, the engaging hole 38, 38 and the engaging pawl 24, 24 are engaged with each other.

Two engaging protruding walls 40A, 40B are provided respectively corresponding to the cap positioning recess portions 19B, 19B of the connector housing 11. When the cap 14 is attached to the connector housing 11, the two engaging protruding walls 40A, 40B are inserted and engaged in the cap positioning recess portions 19B, 19B.

Two sheet-shaped spring portions 42A, 42B are sheet springs and composed being integrated with the cap 14 as follows. The upper and lower end portions of each sheet-shaped spring portion are fixed to the cap 14, and the intermediate portion 43 of each sheet-shaped spring portion is bent to a substantially elbowed shape so that the intermediate portion 43 protrudes inward. When the intermediate portion 43 of each spring portion 42A, 42B is pushed to the cap body side, a repulsion force is generated by its own elastic force, that is, a spring force is generated. In this connection, the spring portions 42A, 42B are located on the cap 14 as follows. When the cap 14 is attached to the connector housing 11, the spring portion 42A corresponds to one face (back face) of the light emitting element module 30, and the spring portion 42B corresponds to one face (back face) of the light receiving element module 31.

As shown in Figs. 1 and 3, the shield case 15 is formed into a substantially square frame body which covers the connector housing 11 from the outside except for the front face and the lower face of the connector housing. The shield case 15 is composed of a metallic sheet by means of press forming, for example, the shield case 15 is composed of a copper alloy sheet by means of press forming and the surface is plated with tin.

Next, assembling of the optical connector composed as explained above will be explained below. First, the sleeves 12, which are optical transmission members, are respectively press-fitted into the small diameter portions 27, 27 of the receiving cylinders 21A, 21B, so that the sleeves 12, 12 can be positioned with respect to the receiving cylinders 21A, 21B.

Next, the light emitting element module 30 is attached and accommodated in the accommodating recess portion 17A and the light receiving element module 31 is attached and accommodated in the accommodating recess portion 17B so that the hole 36 of the light emitting element module 30 and the hole 37 of the light receiving element module 31 can be respectively directed to the front face side (the side opposed to the sleeves 12, 12 and the small diameter portions 27, 27) and the forward end portions of the rear portions of the mold portions 32, 33 can be accommodated in the holes 36, 37. As shown in Fig. 5, when the light emitting element module 30 and the light receiving element module 31 are attached as described above, a pair of housing protruding portions 18, 18 are inserted into a pair of positioning holes 44, 44 which are formed in the light emitting element module 30, so that the light emitting element module 30 and the light receiving element module 31 can be positioned in the accommodating recess portions 17A, 17B under the condition that the light emitting element module 30 and the light receiving element module 31 can not be turned. In the above state, the terminals 34, 35 of the light emitting element module 30 and the light receiving element module 31 are guided out from the lower face of the connector housing 11 to the outside of the connector housing 11. Fig. 5 is a view showing a state in which the light emitting element module 30 and the light receiving element module 31 are respectively attached to the accommodating recess portions 17A, 17B.

Next, as shown in Figs. 1 and 3 (as partially shown in Fig. 6), the cap 14 is attached from the outside to the rear wall 22C of the connector housing 11. When the cap 14 is attached, while the engaging pieces 39, 39 of the cap 14 are being made to respectively correspond to the guide grooves 23, 23 of the connector housing 11, the cap 14 is pushed to the connector housing 11. Due to this pushing operation, the engaging pieces 39, 39 slide in the guide grooves 23, 23, and the entire cap 14 proceeds to the rear wall 22C of the connector housing 11. In the middle of this pushing operation, the engaging protruding walls 40A, 40B are inserted into the cap positioning recess portions 19B of the connector housing 11, and the cap positioning protruding wall 19A of the connector housing 11 is inserted into the recess portion 41 of the cap 14. In this way, positioning is started. At the same time, the spring portion 42A, which is formed on the inner face of the cap 14, comes into contact with the back face of the light emitting element module 30 accommodated in the accommodating recess portion 17A, and the spring portion 42B, which is formed on the inner face of the cap 14, comes into contact with the back face of the light receiving element module 31 accommodated in the accommodating recess portion 17B.

When the cap 14 is further pushed, the spring portions 42A, 42B strongly come into pressure contact with the back faces of the light emitting element module 30 and the light receiving element module 31. By the forces of the spring portions 42A, 42B, the light emitting element module 30 and the light receiving element module 31 are pushed to the collision faces (inner faces) in the accommodating recess portions 17A, 17B. By these pushing actions, the light emitting element module 30 and the light receiving element module 31 are positioned with respect to the collision faces of the connector housing 11. Since the sleeves 12, which are optical transmission members, have already been positioned with respect to the connector housing 11, when the light emitting element module 30 and the light receiving element module 31 are positioned as described above, it can be said that the light emitting element module 30 and the light receiving element module 31 are positioned with respect to the sleeves 12.

In the process in which the cap 14 is pushed to a predetermined position, the engaging pieces 39, 39 slidably proceeding in the guide grooves 23, 23 collide with the engaging pawls 24, 24 in the guide grooves 23, 23. However, faces of the engaging pawls 24, 24, which engage with the forward end portions of the engaging pieces 39, 39, are formed into the inclined faces 24a, 24a. Therefore, when the engaging pieces 39, 39 collide with the inclined faces 24a, 24a, the engaging pieces 39, 39 deflect outside following the inclined faces 24a, 24a by the elastic deformation property of the engaging pieces 39, 39. After the engaging holes 38, 38 have passed through the engaging pawls 24, 24, the engaging pieces 39, 39 are elastically returned, and the engaging holes 38, 38 and the engaging pawls 24, 24 are engaged with each other. Due to this engagement of and the engaging holes 38, 38 with the engaging pawls 24, 24, the cap 14 can be prevented from coming out from the connector housing 11.

Accordingly, after the cap 14 has been attached to the connector housing 11, the spring forces, which are respectively generated by the spring portions 42A, 42B in the cap 14, act between the connector housing 11 and the optical element module 13 (the light emitting element module 30 and the light receiving element module 31) and between the optical element module 13 and the cap 14. Therefore, under the condition that the spring force is applied to between the connector housing 11 and the optical element module 13 and between the optical element module 13 and the cap 14, the optical element module 13 can be strongly pinched by the cap 14 and the connector housing 11 and held without causing any rattle. In this connection, the spring force, by which the optical element module 13 is pinched between the cap 14 and the connector housing 11, is generated by the spring portions 42A, 42B. An intensity of this spring force is appropriately set according to the size and profile of the optical element module 13. After the cap 14 has been attached to the connector housing 11, the terminals 34, 35 of the light emitting element module 30 and the light receiving element module 31 are guided outside the connector housing 11 from between the housing 11 and the cap 14.

Successively, the shield case 15 is attached to the cap 14 from the outside. When this shield case 15 covers the connector housing 11 except for the front face and the lower face of the connector housing 11, assembly is complete. Figs. 1 and 3 are views showing a state in which the assembly work has been completed.

In the optical connector composed as described above, the spring is always activated between the collision face of the connector housing 11 and the optical element module 13 and between the optical element module 13 and the cap 14. Accordingly, even when errors of manufacturing are caused and rattle is generated between the connector housing 11 and the optical element module 13 and between the optical element module 13 and the cap 14, the connector housing 11 and the optical element module 13 are restricted to each other by the spring forces of the spring portions 42A, 42B, and the optical element module 13 and the cap 14 are also restricted to each other by the spring forces of the spring portions 42A, 42B. Therefore, no rattle is caused. In this way, the errors of manufacturing can be absorbed by the effects of the spring forces. Due to the foregoing, it is possible for the optical element module 13 to be held at a predetermined position in the connector housing 11, for example, the optical element module 13 can be always held on the collision face without causing any rattle. As a result, the optical connector is not so much affected by the dimension control and the work control at the time of manufacturing. Therefore, the optical connector can be simply manufactured.

Since the optical element module 13 can be held at a predetermined position in the connector housing 11, it is possible to avoid a fluctuation of the distance between the optical element module 13 and the optical transmission member (sleeve 12) which is accommodated in the same connector housing 11 so as to give and receive an optical signal. Due to the foregoing, a loss of the quantity of light, which is caused by a fluctuation of the distance between the optical element module 13 and the optical transmission member (sleeve 12), can be suppressed. Therefore, the product accuracy can be stabilized and the quality can be enhanced.

Since the occurrence of rattle of the optical element module 13 can be avoided, the occurrence of rattle of the terminals 34, 35 of the optical element module 13, which are guided outside of the connector housing 11 from between the connector housing 11 and the cap 14, can be simultaneously avoided. As a result, the optical connector can be simply mounted on the circuit board 100. Therefore, impossibility of the insertion and deformation of the terminals 34, 35 can be avoided.

Concerning the optical element module 13, there are provided a light emitting element module 30 having a light emitting element for supplying an optical signal to the optical transmission member (sleeve 12) and a light receiving element module 31 having a light receiving element for receiving an optical signal from the optical transmission member (sleeve 12). Accordingly, it is possible to obtain a function of supplying an optical signal to the optical transmission member (sleeve 12) and a function of receiving an optical signal from the optical transmission member (sleeve 12) .

The cap 14 is made of synthetic resin by means of molding. At the time of molding, a portion of the cap 14 is formed into a rectangular sheet shape so that the spring portions 42A, 42B can be formed. Therefore, the spring portions 42A, 42B can be simply made on the inner face of the cap 14 by applying the technique of injection molding. Accordingly, the optical connector can be simply manufactured. Each spring portion 42A, 42B is formed in such a manner that a substantially intermediate portion of the rectangular sheet-shaped portion is bent inward and protrudes being formed into a elbowed shape. Therefore, the protruding intermediate portion 43, that is, the same portion of the spring portion 42A, 42B can be always made to come into pressure contact with one side (back face) of the optical element module 13. Accordingly, the spring force can be stabilized.

On both sides of the connector housing 11 which are opposed to each other, that is, on the left wall 22A and the right wall 22B, the engaging pawls 24 are respectively provided. At both side edges of the cap 14, a pair of right and left engaging pieces 39, 39 are provided, which slide on both sides of the connector housing 11 at the time of attaching the cap 14 to the connector housing 11 in such a manner that the pair of right and left engaging pieces 39, 39 pinch the connector housing 11, wherein the right and left engaging pieces 39, 39 have engaging holes 38, 38 to be engaged with the engaging pawls 24, 24 of the connector housing 11 at the positions corresponding to the engaging pawls 24, 24. Accordingly, when the pair of right and left engaging pieces 39, 39 of the cap 14 are respectively slid on both sides of the connector housing 11, the engaging holes 38, 38 of the engaging pieces 39, 39 are engaged with the engaging pawls 24, 24 of the connector housing 11 at positions where the engaging holes 38, 38 correspond to the engaging pawls 24, 24. Due to this engagement, the cap 14 can be simply attached to the connector housing 11 while the cap 14 is being prevented from coming off the connector housing 11.

In this connection, variations may be made by those skilled in that art without departing from the scope of the claims of the present invention.

## Claims

1. An optical connector, comprising:
a connector housing (11);
an optical transmission member (12), attached to and accommodated in the connector housing (11);
an optical element module(13), attached to the connector housing (11) and opposed to the optical transmission member (12) so as to communicate an optical signal with the optical transmission member (12); and a cap (14)
**characterized in that**
the cap (14) is formed with a spring part (42A, 42B) and attached to the connector housing (11) such that the optical element module(13) is held between the cap (14) and the connector housing (11) while the spring (42A, 42B) comes into pressure contact with one face of the optical element module (13) so that the other face of the optical element module (13) can be pushed to the connector housing (11), and
the spring part (42A, 42B) is composed of a portion of the cap (14) which is formed into a rectangular sheet shape; and
a substantially intermediate portion (43) of the rectangular sheet-shaped portion is bent inward and protruded and formed into a shape, the cross-section of which is a substantial elbowed shape.

2. The optical connector according to claim 1, **characterized in that** the optical element module includes:
a light emitting element module (30), having a light emitting element giving an optical signal to the optical transmission member (12); and
a light receiving element module(31), having a light receiving element receiving an optical signal from the optical transmission member (12); and
wherein the spring part (42A, 42B) includes:
a first spring (42A) which comes into contact with the light emitting element module (30); and
a second spring (42B) which comes into contact with the light receiving element module(31).

3. The optical connector according to claim 1, **characterized in that** the cap (14) is comprised of synthetic resin.

4. The optical connector according to claim 1, **characterized in that** engaging pawls (24) are provided on both sides of the connector housing (11) opposed to each other;
a pair of right and left engaging pieces (39) are provided on both side edges of the cap (14);
the engaging pieces (39) are slid on both sides of the connector housing (11) in such a manner that the engaging pieces (39) pinch the connector housing (11) at the time of attaching the cap (14), and the engaging pieces (39) respectively have an engaging hole (38) engaged with the engaging pawl (24) at a position corresponding to the engaging pawl (24) of the connector housing (11).

## Patentansprüche

1. Ein optischer Verbinder, umfassend:
ein Verbindergehäuse (11);
ein optisches Übertragungselement (12), welches an dem Verbindergehäuse (11) angebracht und in diesem aufgenommen ist;
ein optisches Komponentenmodul (13), welches an dem Verbindergehäuse (11) gegenüberliegend dem optischen Übertragungselement (12) angebracht ist, um ein optisches Signal an das optische Übertragungselement (12) zu übermitteln; und
einen Deckel (14)
**dadurch gekennzeichnet, dass**
an dem Deckel (14) ein Federteil (42A, 42B) angeformt ist und der Deckel (14) an dem Verbindergehäuse (11) so angebracht ist, dass das optische Komponentenmodul (13) zwischen dem Deckel (14) und dem Verbindergehäuse (11) gehalten ist während das Federteil (42A, 42B) in Presskontakt mit einer Fläche des optischen Komponentenmoduls (13) kommt, so dass die andere Fläche des optischen Komponentenmoduls (13) zu dem Verbindergehäuse (11) gedrückt werden kann, und
das Federteil (42A, 42B) aus einem Abschnitt des Deckels (14) in Form einer rechteckigen Platte gebildet ist; und
ein im Wesentlichen zwischenliegender Teil (43) des Abschnitts in Form einer rechteckigen Platte nach innen gebogen ist und herauskragt und in Form gebracht ist, und dessen Querschnitt eine im wesentlichen gekröpfte Form ist.

2. Der optische Verbinder nach Anspruch 1, **dadurch gekennzeichnet, dass** das optische Komponentenmodul enthält:
ein lichtaussendendes Komponentenmodul (30), das eine lichtaussendende Komponente aufweist, die ein optisches Signal zu dem optischen Übertragungselement (12) ausgibt; und
ein lichtempfangendes Komponentenmodul (31), das eine lichtempfangende Komponente aufweist, das ein optisches Signal von dem optischen Übertragungselement (12) empfängt; und
worin das Federteil (42A, 42B) enthält:
eine erste Feder (42A), die mit dem lichtaussendenden Komponentenmodul (30) in Kontakt kommt; und
eine zweite Feder (42B), die mit dem lichtempfangenden Komponentenmodul (31) in Kontakt kommt.

3. Der optische Verbinder nach Anspruch 1, **dadurch gekennzeichnet, dass** der Deckel (14) synthetisches Harz enthält.

4. Der optische Verbinder nach Anspruch 1, **dadurch gekennzeichnet, dass** sich gegenüberliegende Eingriffsklauen (24) auf beiden Seiten des Verbindungsgehäuses (11) vorgesehen sind;
ein Paar von rechten und linken Eingriffsteilen (39) an beiden Seitenkanten des Deckels (14) vorgesehen sind;
die Eingriffsteile (39) derart auf beiden Seiten des Verbindergehäuses (11) aufgeschoben sind, dass sie das Verbindergehäuse (11) zum Zeitpunkt des Anbringens des Deckels (14) drücken, und die Eingriffsteile (39) jeweils ein Eingriffsloch (38) haben, das sich in Eingriff mit der Eingriffsklaue (24) an einer Position entsprechend der Eingriffsklaue (24) des Verbindergehäuses (11) befindet.

## Revendications

1. Connecteur optique, comprenant:
un logement de connecteur (11) ;
un élément de transmission optique (12), fixé et disposé dans le logement de connecteur (11) ;
un module d'élément optique (13), fixé au logement de connecteur (11) et opposé à l'élément de transmission optique (12) de façon à communiquer un signal optique avec l'élément de transmission optique (12) ; et
une coiffe (14),
**caractérisé en ce que**
la coiffe (14) est formée d'une partie à ressort (42A, 42B) et fixée au logement de connecteur (11) de sorte que le module d'élément optique (13) soit maintenu entre la coiffe (14) et le logement de connecteur (11) tandis que le ressort (42A, 42B) vient en contact par pression avec une face du module d'élément optique (13), de sorte que l'autre face du module d'élément optique (13) puisse être poussée sur le logement de connecteur (11), et
la partie à ressort (42A, 42B) est composée d'une partie de la coiffe (14) qui est en forme de feuille rectangulaire, et
une portion sensiblement intermédiaire (43) de la portion en forme de feuille rectangulaire est pliée vers l'intérieur et ressort et a une forme, dont la coupe transversale est une forme sensiblement en coude.

2. Connecteur optique selon la revendication 1, **caractérisé en ce que** le module d'élément optique comprend :
un module d'élément émetteur de lumière (30), ayant un élément émetteur de lumière, qui envoie un signal optique à l'élément de transmission optique (12) ; et
un module d'élément récepteur de lumière (31) ayant un élément récepteur de lumière, qui reçoit un signal optique provenant de l'élément de transmission optique (12) ; et
dans lequel la partie à ressort (42A, 42B) comprend:
un premier ressort (42A) qui vient en contact avec le module d'élément émetteur de lumière (30) ; et
un second ressort (42B) qui vient en contact avec le module d'élément récepteur de lumière (31).

3. Connecteur optique selon la revendication 1, **caractérisé en ce que** la coiffe (14) comprend de la résine synthétique.

4. Connecteur optique selon la revendication 1, **caractérisé en ce que** des cliquets de prise (24) sont ménagés des deux côtés du logement de connecteur (11) opposés l'un à l'autre ;
une paire de pièces de prise droite et gauche (39) sont ménagées sur les bords des deux côtés de la coiffe (14) ;
les pièces de prise (39) coulissent des deux côtés du logement de connecteur (11) de telle sorte que lesdites pièces de prise (39) pincent le logement de connecteur (11) au moment de fixer la coiffe (14), et les pièces de prise (39) ont respectivement un orifice de prise (38) qui s'engage avec le cliquet de prise (24) dans une position correspondant au cliquet de prise (24) du logement de connecteur (11).
